# EUROPEAN PATENT APPLICATION

(11) **EP 0 607 469 A1**
(43) Date of publication of application: **27.07.1994**
(21) Application number: 92830686.9
(22) Date of filing: 23.12.1992
(51) Int. Cl.: B65D 6/10, B65D 25/18

(54) **Two-part plastic case with double walls**

(71) Applicant: Lu, Jeng-Lung, Chia Yi City (TW)
(72) Inventor: Lu, Jeng-Lung, Chia Yi City (TW)
(74) Representative: Righetti, Giuseppe

(57) **Abstract**

Improved reusable plastic case having an inner case (5) and an outer case (6) produced by way of injection molding is disclosed. The inner case (5) is provided with an opening (51) at the front side thereof and a protruded peripheral flange (52) is disposed around the front opening (51), and a snap member (53) perpendicular to the peripheral flange (52) is disposed all therearound. The outer case (6) is provided with an opening (61) at the front side and a through hole (62) at the rear side thereof with a peripheral edge (63) defined on the rear side; the through hole (62) is defined in such a size that the rear end of the inner case (5) can be just fixed therein. On each inner side wall of the outer case (6) is disposed a plurality of axially located protrusion ribs (64) each of which is provided with a snap recess (65) at the end adjacent to the front opening of the outer case (6) so that the peripheral snap member (53) can be firmly engaged with the plurality of protrusion ribs (64) by way of the snap recess (65), or the snap member can be fixedly engaged with the protrusion ribs by way of adhesive glue or high frequency adhesion method, permitting the present plastic case to be structured in a simple and cheap manner and to be assembled in a fast manner and be reused as many times as its condition permits.

## Description

The present invention relates to an improved reusable plastic case having an inner and outer case that are assembled together by simple insertion of the former into the latter. The outer case is provided with a plurality of axially located protrusion ribs in parallel with each other an each inner side wall thereof, and a front opening and a rear through hole are disposed on the front and rear side thereof respectively. A peripheral flange is disposed on the rim of the front opening of the inner case and a peripheral protrusion snap member perpendicular to the flange is disposed therearound. Each protrusion rib has a snap recess disposed at the end adjacent to the front opening of the outer case so that the inner case can be in firm snap engagement with the outer case in assembly. The inner and outer cases can also be fastened together by adhesive glue or by way of high frequency adhesion method.

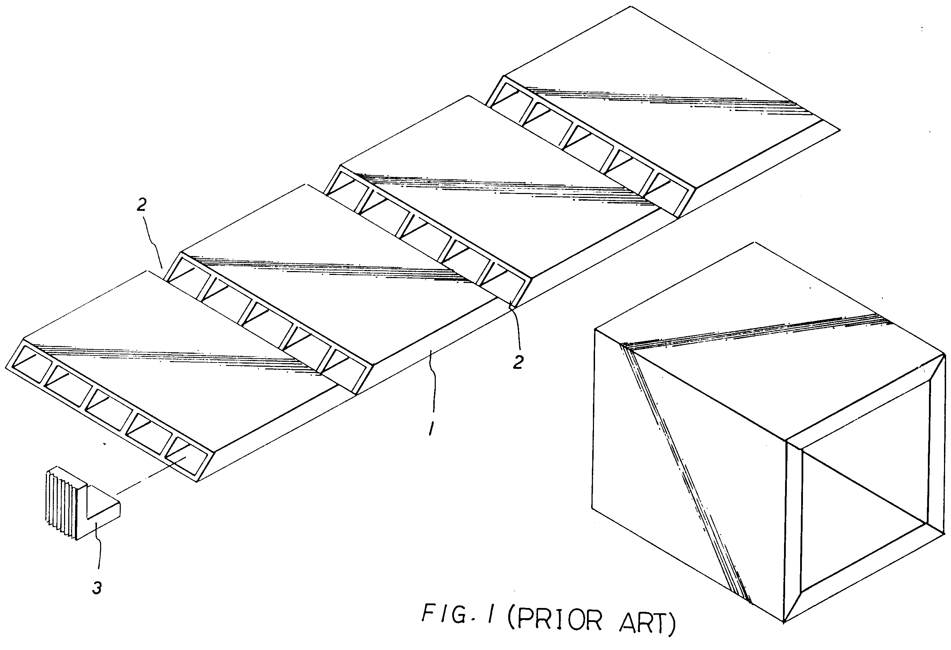

The conventional case is generally made of wooden boards nailed together; but this kind of case has become rather expensive and is produced relatively slowly. In consideration of cost of production and protection of natural resources, the wooden cases have been replaced by reusable plastic ones as shown in Fig. 1. The prior art plastic case is comprised of a number of boards 1 which are consecutively foldably connected to each other with a V-shaped groove 2 disposed 5 at each connection of the boards 1 so as to permit the consecutive boards to be smoothly folded into a case form with each thereof joined together by way of L-shaped fixing members 3. This kind of plastic case cannot be mass produced with speed and the material used is so abundant that shortage of the supply of material is not a major concern. However, there are still some disadvantages associated with this kind of case.

Firstly, the speed of production of these cases is faster than that of wooden cases, but they are still assembled by means of adhesive glue. Secondly, the crevices produced in the assembly of the consecutively connected boards make the appearance of the cases look bad. Thirdly, if the plastic boards are not softened by heat at the folded connections, the quality of the material thereat will become deteriorated. Fourthly, these corners of the prior art cases are sharply formed, causing accidental wounding to people. These are problems to be solved in production of this kind of plastic case.

Moreover, the plastic injection molding art has also been applied to produce integral cases, but this kind of case is relatively heavy and expensive to produce as a result of the thickness of the wall thereof being hardly reduced in one aspect and the time to take the product out of a cooled mold being too long in another aspect.

Therefore, the primary object of the present invention is to provide a reusable plastic case having an inner case and an outer case that can be assembled with ease and speed.

Another object of the present invention is to provide a reusable plastic case which can be mass produced by way of plastic injection molding at fast speed in various shapes as required.

One further object of the present invention is to provide a reusable plastic case which is simple in structure and easy to assemble.

One further object of the present invention is to provide a reusable plastic packing case which is produced at low cost due to the simplicity of the case structure which helps the reduction of molding cost.

One still further object of the present invention is to provide an improved reusable plastic case which can be produced with less than half of the material used in a conventional case.

In the drawings:
- Fig. 1 is a perspective diagram showing the structure of a prior art case;
- Fig. 2 is a perspective diagram showing the exploded components of the present invention;
- Fig. 3 is a sectional view of the present invention;
- Fig. 4 is another sectional view of the present invention;
- Fig. 5 is a diagram showing a case made in various shape.

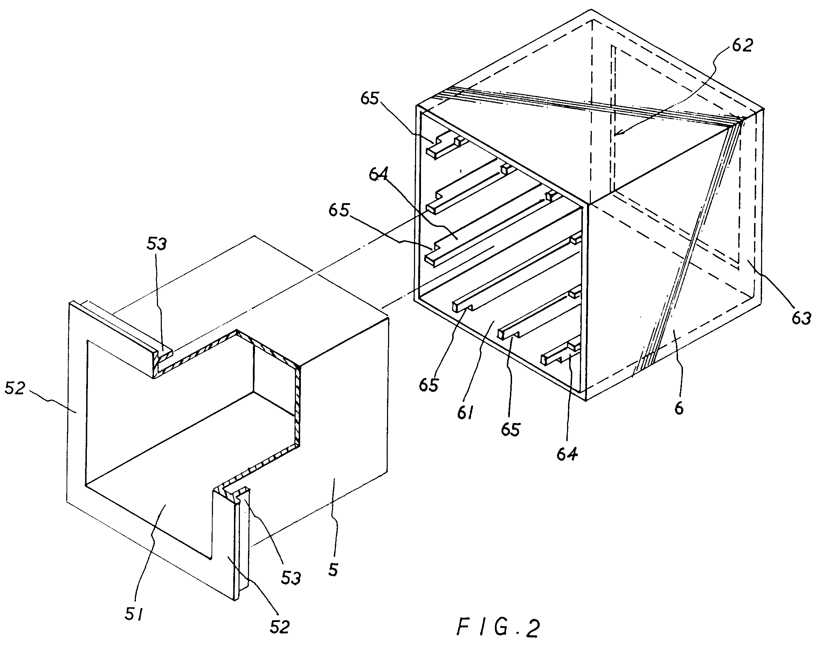

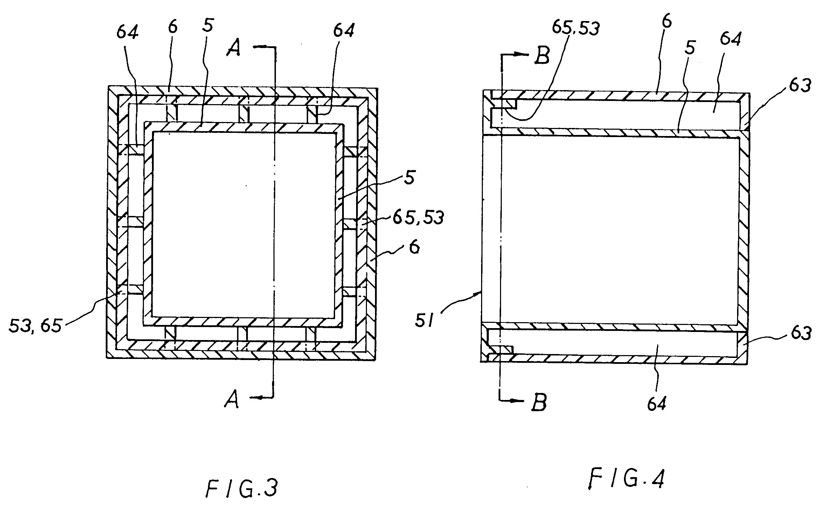

Referring to Figs. 2, 3, 4, the present reusable plastic case is comprised of an inner case 5 and an outer case 6 wherein the inner case 5 is produced by way of plastics injection molding in a hollow form and is provided with an opening 51 at the front side thereof and a peripheral flange 52 is disposed around the rim of the front side of the inner case 5. A projected snap member 53 perpendicular to the corresponding peripheral flange 52 is disposed all therearound with each snap member in parallel with each side wall of the inner case 5. The outer case 6 is also produced by injection molding and is provided with an opening at the front side thereof and a square through hole 62 which conforms to the rear side of the inner case 5 so that the rear side of the inner case 5 can be just fixed in the square through hole 62 with the rear side of the inner case 5 flush with the rear side of the outer case 6. A peripheral flange 63 is defined around the square through hole 62 on the rear side of the outer case 6.

There are a plurality of parallel projection ribs 64 axially disposed and in perpendicular to each inner side wall of the outer case 6. Each projection rib 64 is provided with a snap recess 65 at the frontmost end thereof adjacent to the opening 61 of the outer case 6 so that the snap members 53 disposed on the peripheral flange 52 can be firmly engaged with the projection ribs 64 when the inner case 5 is inserted into the outer case 6 in assembly and the snap members and the projection ribs can be further fixedly joined together by way of adhesive glue or high frequency adhesion method.

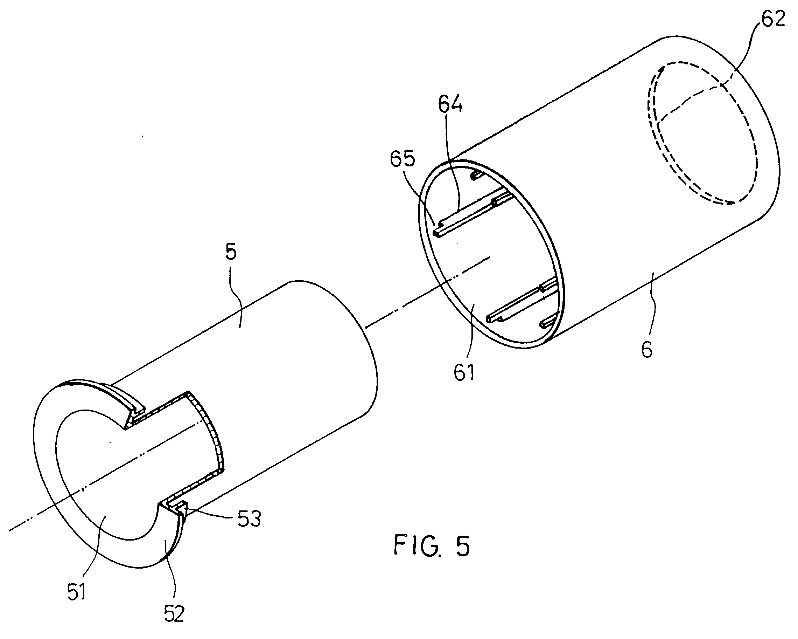

Referring to Fig. 5, the reusable plastic case of the present invention can be made in as many kinds of shape as one can design so as to permit goods of different shapes to be fitted therein.

It can be clearly seen that the present invention is characterized in that the inner case 5 and the outer case 6 each of which is integrally made by injection molding, can be easily assembled by simple insertion of the inner case 5 into the outer case 6 whereby the time required to get the two cases assembled is effectively reduced and the more than half of the material used in the production thereof is saved.

## Claims

1. An improved reusable plastic case, comprising:
- an inner case (5) produced by way of injection molding in a hollow form, having an opening (51) at the front side thereof with a peripheral flange (52) disposed around the rim of said opening (51) and a projected peripheral snap member (53) disposed in parallel with each side wall of said case being perpendicular to said peripheral flange (52);
- an outer case (6) produced by way of injection molding in a hollow form having an opening (61) at the front side and a square through hole (62) at the rear side thereof with a peripheral flanged rim (63) disposed therearound so that the rear side of said inner case (5) can be fixed right in said square through hole (62) with the rear side of said inner case (5) lying flush with the rear side of said outer case (6); each inner wall of said outer case (6) being provided with a plurality of axially disposed projection ribs (64) each of which is provided with a snap recess (65) at the front end thereof adjacent to said opening (61);
whereby said inner case (5) and said outer case (6) can be assembled together by insertion the former into the latter with said peripheral snap member (53) in snap engagement with said snap recesses (65) of said projection ribs (64).

2. An improved reusable plastic case as claimed in claim 1, in which said snap member (53) and said projection ribs (64) can be further fixed together by adhesive glue or by way of high frequency adhesion process.

3. An improved reusable plastic case as claimed in claim 1, in which said inner case (5) and said outer case (6) can be made by way of injection molding in various shapes so as to receive goods having various configuration.
